# EUROPEAN PATENT SPECIFICATION

(11) **EP 1 886 578 B1**
(45) Date of publication and mention of the grant of the patent: **12.12.2012**
(21) Application number: 05773885.8
(22) Date of filing: 01.07.2005
(51) Int. Cl.: A23G 1/02, A23G 1/00

(54) **METHOD OF PREPARING A HIGHLY-SOLUBLE COCOA EXTRACT**
VERFAHREN ZUR HERSTELLUNG EINES GUTLÖSLICHEN KAKAOEXTRAKTS
PROCEDE DE PREPARATION D'UN EXTRAIT DE CACAO FORTEMENT SOLUBLE

(30) Priority: 05.05.2005 ES 200501080
(43) Date of publication of application: 13.02.2008
(73) Proprietor: Naturex, 84140 Avignon (FR)
(72) Inventor: MOULAY, Leila, E-46930 Quart de Poblet (ES); SNIDERMAN, Zachary, E-46930 Quart de Poblet (ES); IBARRA, Alvin, E-46930 Quart De Poblet (ES); MARTI BARTUAL, Vicente, E-46930 Quart de Poblet (ES)
(74) Representative: Marek, Pierre
(86) International application number: PCT/ES2005/000377
(87) International publication number: WO 2006/117416

(56) References cited:
- EP-A- 1 352 570
- US-A- 3 392 027
- US-A- 3 392 027
- US-A- 3 397 061
- US-A- 4 156 030
- US-A- 4 343 818
- US-A- 4 948 600
- US-A- 5 338 554

## Description

The object of the present invention, as declared in the title of this specification, consists of a "Process for preparing a highly soluble cocoa extract" of the type used as a complement in foods, nutraceuticals, dietary supplements and functional foods.

### BACKGROUND

During the cocoa powder manufacturing process, the bean is fermented, dried and cleaned before being separated into husk and nibs. The nibs continue in the cocoa powder manufacturing process, whilst the husk is separated off to be used for other purposes. The husk represents approximately 12.5% of the cocoa bean.

The husk contains more than 40% dietary fibre (20% cellulose, 12% hemicellulose and 12% galacturonic acids). The husk also contains protein (15%), lignin (13%, Klason method), minerals (13%), lipids (2%), carbohydrates (2% as starches and sugars), theobromine (1%), and other compounds such as polyphenols, tannins and caffeine.

Cocoa husk is a product that has recently been used for various applications in food and pharmaceuticals.

In some processes for the production of cacao butter alone, pressing systems (hydraulic or expeller systems) are used to separate the cocoa butter from the bean. The process produces cocoa butter and also a by-product that is a mixture of partially defatted husk and nibs. This by-product is commonly known as press cake.

The press cake contains approximately 45% dietary fibre (6% soluble and 39% insoluble). It also contains proteins (24%), fats (12%), and other minority compounds such as polyphenols, theobromine and caffeine.

Some patents protect applications of the husk and the press cake for manufacturing products for use in foods and pharmaceuticals. These do not, however, affect the invention disclosed herein.

Patent ES 209967681 protects an ingredient for food and pharmaceuticals for human consumption, mainly in the dietary area. This ingredient is based on toasting of the husk, and it also discloses its nutritional composition. However, this document does not specify whether the husk has previously been treated or the process conditions used to produce the ingredient.

Patent EP 13 52 570 the method of producing a soluble cocoa fibre using the husk, using an aqueous extraction. In this process, the inventore use hot water for the extraction at a temperature of between 100°C and 130°C. No catalysts of any type are used in the process. The soluble fibre is then purified using activated carbon treatments, resin treatments, UF concentration, solvent precipitation, and finally mineral separation by dialysis or with an ion exchange resin. This product is designed for application with proteins in food, such as milk-based beverages, stabilisers for cocoa beverages, coating agents with a wide range of applications, age resistors for starch-containing foods, and shelf-life extenders for foods and beverages.

Patent US 4948600 covers a process for producing a product that is rich in dietary fibre using conventional cocoa powder. In this invention the product is obtained by removing the starch from the cocoa powder. The starch is enzymatically degraded, and then extracted with continuous washing using a separating operation. Finally, the low-in-starch cocoa is dried. This process produces a product with a dietary fibre content of between 35% and 75%. In this product the concentration of insoluble fibre is greater than the content of soluble fibre. The end product is suitable for producing e.g. chocolate enriched with dietary fibre, chocolate beverages enriched with dietary fibre, chocolate sauces enriched with dietary fibre, and desserts enriched with dietary fibre.

Patent US 4156030 covers a process for producing an extract from the husk using acidified ethanol. In this process, the husk is ground and the extraction is carried out at reflux temperature, the solution containing between 80% and 90% ethanol and 10% to 15% acid (hydrochloric, phosphoric, citric or tartaric). After extraction, the ethanol is evaporated and the concentrate is dried.

Patent WO 004619A3 relates to a process for producing cocoa powder from press cake. In this process, the entire cocoa bean is partially defatted by pressing to produce a press caKe with a fat content of 10% to 12%. Optionally, the press cake can be completely defatted using organic solvents or by supercritical extraction with CO2. Finally, the press cake is ground to produce cocoa bean powder.
US4343818, US3392027, US5338554 refer to processes for preparing a cocoa product, the processes comprising mixing a cocoa starting material with water, enzymatic treatment, separation and concentration of a liquid phase. All of those 3 documents refer to processes in which cocoa raw material is roasted. This roasting is employed as step to develop the classic cocoa flavor or color but it implies the reduction of the soluble fiber content of the final product among other drawbacks. In the present invention, no roasting is carried out, avoiding roasting associated drawbacks; on the other hand, a sterilization step by oversaturated steam of the cocoa husk and/or press cake raw material is performed in order to reduce the microbial load of the non roasted cocoa husk and/or press cake raw material. Additionally, US4343818, implies an obliged alcalization step that is not carried out in the present invention. US3392027 refers to a separation step, not considering any centrifuging nor clarifying step to obtain the soluble fiber fraction of the cocoa extract. US5338554 implies a first first step of extraction with alcohol is on roasted cocoa powder as raw material, whereas the present invention do not consider any alcohol extraction step, neither roasting step, nor cocoa powder as raw material.

The present invention proposes an innovative process for producing a highly soluble extract using cocoa bean husk or press cake (defatted bean), or a mixture of the two. In this process, the microbial load in the raw material is reduced by using over-saturated steam. Then the raw material is mixed with water and is enzymatically treated. The purpose of the enzymatic treatment is to aid the hydrolysis of the insoluble fraction with a consequent increase in the soluble components during the aqueous extraction. The temperature of the enzymatic reaction and extraction is below 100°C. After the extraction process, the solids are separated from the highly soluble fraction using centrifuge technology (decanter and clarifiers). The highly soluble cocoa husk/press cake extract is then dried and optionally ground.

The purpose of the product is for application in foods, nutraceuticals, dietary supplements, and functional foods. The main characteristic of this product is its high solubility, and its nutritional and sensory profile. The principal nutritional compounds are soluble fibre, minerals, proteins, polyphenols and theobromine. The sensory profile of the product is similar to that of cocoa. This product is ideal for application in chocolate, bakery products, beverages, snacks, dairy products and confectionery.

### DESCRIPTION OF THE INVENTION

The invention is a process wherein a highly soluble extract is produced from cocoa husk and/or press cake as sources of the raw material.

In the invention, the raw material is sterilised in reactors that are designed to withstand high temperatures and pressures. Direct or indirect over-saturated steam can be used as a heat source to reach temperatures of more than 100°C and high pressures in the reactor; e.g. 140°C and 1.5 bars. The sterilisation time is preferably more than 5 minutes, e.g. 30 minutes.

After the sterilisation step, the product is subjected to a process of enzymatic hydrolysis. To carry out this process, the sterilised raw material is mixed with water. The list of raw materials: a suitable amount of water is between 1:5 and 1:15, e.g. 1:7. Then the temperature for the process is stabilised at between 50°C and 70°C. Under these conditions, the pH of the mixture is between 4.5 and 5.6. Once the mixture has been thoroughly mixed, an enzyme with predominantly beta-glucanase activity is added. The enzyme is added to the mixture in an approximate concentration of 0.01 Fungal Beta-Glucanase units (FBG) or more per kilogram of cocoa raw material. The reaction time of the enzyme is 1 to 3 process hours, e.g. 2 process hours. The reaction time is directly related to the amount of enzyme that is added; the more enzyme that is added, the shorter the reaction time. Too much or too little stirring may be detrimental to the reaction; therefore, the rate of stirring must be graduated so that the reaction takes place under the best possible process conditions. Furthermore, the enzyme should preferably be inactivated after the enzymatic reaction is completed. This inactivation may be carried out after the hydrolysis operation or at a subsequent step in production.

After the enzymatic hydrolysis, the mixture is centrifuged in order to separate the soluble fraction.

The total solids are defined as the sum of the solids in suspension and the soluble solids. Soluble solids are technologically defined as particles with a particle size of less than 5 microns. Therefore, to produce a soluble product, all particles in suspension that are larger than 5 microns must be separated.

The separating operation may be carried out in two steps: a centrifuging step and an optional clarifying step. All the solids larger than 20 microns are separated in the centrifuging step, whilst the remaining solids in suspension that are larger than 5 microns are separated in the clarifying step.

Prior to separation, it is recommended that the mixture should be cooled to below 55°C, e.g. 40°C to aid separation. The cooled mixture is then centrifuged to produce a solid phase and a liquid phase. The solid phase is discarded. Industrial decanters may be used in the centrifuging process, e.g. those of the FP series by Pieralisi (i.e. FP600 2RS).

In the optional clarifying step, vertical plate clarifiers may be used, e.g. those supplied by Alfa Laval or Westfalia Separator. It is also possible to clarify the liquid phase from the decanter using microfiltration systems, such as those supplied by GEA.

The liquid phase resulting from the centrifuging operations has a total solids content of between 1 and 5%.

After the separation step, the liquid phase is concentrated. During concentration, the liquid phase is concentrated to achieve a total solids concentration of more than 10%, e.g. 30%. This operation may be completed using single, double or triple phase concentrators, at temperatures of between 60°C and 100°C, preferably under vacuum conditions.

The concentrate then undergoes a drying step. The objective of this step is to produce a product with a moisture content of less than 10%, e.g. 5% moisture.

The product may be dried using a spray dryer at temperatures above 75°C, e.g. 130°C. If necessary, vacuum may be used during the operation. If a spray dryer is used, it is not necessary to grind the product. However, if another drying system is used, e.g. horizontal or vertical strip dryers, it is necessary to perform a final grinding of the product. These dryers may operate in normal conditions or under vacuum. The enzyme may also be inactivated in this operation by subjecting the product to temperatures above 90°C for 10 minutes.

The end product is a highly soluble cocoa husk and/or press cake extract in powder form, the particle size of which will preferably be below 100 microns in 99%.

### DESCRIPTION OF A PRACTICAL CASE

### Example 1. Microbiological reduction using over-saturated steam

In this example, the cocoa husk was treated with over-saturated steam in order to reduce the microbial load. The raw material was analysed to determine the Enterobacteriaceae and fungi and yeast content; the values for both indicators were greater than 300,000 cfu/g. The heat treatment was carried out in a reactor by applying the steam directly to the raw material. The process conditions were 1.5 bars and 140°C for 30 minutes. After the heat treatment, the microbiological content of the raw material was analysed again. The results are shown in table 1; as can be seen, the microbiological reduction was significant.

**Table 1. Microbiological content after sterilisation**

| Microbiological indicator | Count |
|---|---|
| Total count1 | 730 cfu/g |
| Fungi and Yeast2 | ≤100 cfu/g |

### References and methods:

(1) AOAC International. Official Methods of Analysis, 17th ed., AOAC International, Arlington, VA, 2003
(2) AOAC International. Official Methods of Analysis, 17th ed., AOAC International, Arlington, VA, 2003.

### Example 2. Processes and yields

900 kg of husk was treated according to the conditions explained in example 1. Then it was mixed with water at a concentration of 1:11 husk:water, the final temperature of the mixture being 20°C. The mixture was then heated to 55°C and 360 g of the commercial enzyme Ultraflo L (novozyme) was added. The mixture was gently stirred for 1.5 hours. After the hydrolysis, the mixture was cooled to 40°C to produce the solid phase after separation by centrifuging and clarifying. The liquid fraction was then concentrated at 60°C in a triple effect concentrator, and dried in a spray dryer with an input temperature of the concentrate of 140°C and an output temperature of the dry product of 90°C. Finally, an extract in powder form with high solubility was produced. The balance of materials during the process can be observed in table 2.

**Table 2. Yields during production of the Husk Extract**

| Operation | kg | % |
|---|---|---|
| Husk | 900 | 100 |
| Water | 10100 | |
| Separation | | |
| Liquid phase | 9504 | 86.4 |
| Solid phase | 1495.27 | 13.6 |
| End product | 188 | 20.8 |

### Example 3. Nutritional and hygiene quality profile of the end product

Table 3 shows some of the compounds analysed in the cocoa husk extract. Table 4 shows the microbiological load in the end product.

**Table 3. Nutritional profile**

| Compound | g/100 g of sample |
|---|---|
| Moisture^{a} | 3.51 |
| Total dietary fibre^{b} | 46.50 |
| Soluble fibre | 42.80 |
| Insoluble fibre | 3.70 |
| Fat^{c} | 1.40 |
| Total sugars^{d} | 1.91 |
| Minerals^{e} | 15.00 |
| Proteins^{f} | 13.10 |
| Theobromine^{g} | 3.40 |
| Caffeine^{g} | 0.19 |
| Polyphenols^{h} | 2.24 |

| | |
|---|---|
| References and methods (a) Spanish Pharmacopoeia 1997; European Pharmacopoeia 2nd Ed. (b) AOAC Method 99143, 17th Ed., 2000, enzymatic-gravimetric method (c) AOAC Method 96315, 17th Ed., 2000 (d) Official European Community method CONSLEG; 1971L0250-26/05/1999 (e) Spanish Pharmacopoeia 1997; European Pharmacopoeia 2nd Ed. (f) AOAC Official Method 97022, 17th Ed. (g) AOAC Official Method 98014, 17th Ed. (h) Analysis of Total Phenolic and Other Oxidation Substrates and Antioxidants by Means of Folin-Ciocalteu Reagent. Methods in Enzymology, Oxidants and Antioxidants, Part A, Lesler Packer (ed) (199), 299, 152-178 (ISBN 0121822001). Academic Press, San Diego. | |

**Table 4. Microbiological profile**

| | |
|---|---|
| Total count | 1500 cfu/g |
| Moulds and Yeasts | < 10 cfu/g |
| Enterobacteriaceae | < 10 cfu/g |
| Coliforms | < 3MPN |
| *E. coli* | Absence in 1 g |
| *Salmonella* | Absence in 25 g |

Having established the stated concept, the claims are given below, thus summarising the novelties to be claimed:

## Claims

1. Process for preparing a highly soluble cocoa extract of the type applied in foods, nutraceuticals, dietary supplements, and functional foods, essentially **characterised in that** it comprises six steps, namely:
a. Sterilisation of the cocoa husk and/or press cake raw material by oversaturated steam.
b. Mixing of the already sterilised cocoa raw material with water.
c. Enzymatic treatment in order to aid the extraction of the soluble components, creating a solid part and a liquid part.
d. Separation of the solid phase and liquid phase, carrying out two steps, a first centrifuging one and after this, a clarifying one.
e. Concentration of the liquid phase.
f. Drying of the concentrate from the liquid phase.

2. Process according to the previous claim, **characterised in that** it presents an optional seventh step consisting of grinding the dry concentrate made from the liquid phase.

3. Process according to claims 1 and 2, **characterised in that** the cocoa raw material consists of cocoa husk produced by its separation from the cocoa bean.

4. Process according to claims 1 and 2, **characterised in that** the cocoa raw material consists of cocoa press cake.

5. Process according to claims 1 and 2, character in that the cocoa raw material consists of a mixture of two of the products described in claims 3 and 4.

6. Process according to claims 1 and 2, character in that the cocoa raw material consists of a mixture of the three products described in claims 3 and 4.

7. Process according to the previous claims, **characterised in that** the cocoa raw material is sterilised by over saturated steam at temperatures above 100°C and for an exposure of more than 5 minutes.

8. Process according to the previous claims, **characterised In that** the cocoa raw material is sterilised by over saturated steam at temperatures at 150°C and for an exposure of 30 minutes.

9. Process according to the previous claims, **characterised in that** the cocoa raw material is mixed in a proportion of between 1:5 parts and 1:15 parts of cocoa raw material:water, this mixture being carried out at a stabilised temperature of between 50°C and 70°C.

10. Process according to the previous claims, **characterised In that** the cocoa raw material is mixed in a proportion of 1 part cocoa to 7 parts water.

11. Process according to the previous claims, **characterised in that** an enzyme is added to the cocoa:water mixture in a concentration of at least 0.005 Fungal Beta-Glucanase units (FBG) per kg of cocoa raw material.

12. Process according to the previous claims, **characterised In that** an enzyme is added to the cocoa:water mixture in a concentration of 0.01 Fungal Beta-Glucanase units (FBG) per kg of cocoa raw material.

13. Process according to the previous claims, **characterised in that** the enzymatic reaction takes place for a period of between 1 and 3 hours.

14. Process according to the previous claims, **characterised in that** the enzymatic reaction takes place for a period of 2 hours.

15. Process according to the previous claims, **characterised in that** the separation of the cocoa and water mixture to produce a liquid phase and a solid phase is carried out using a centrifuge technique.

16. Process according to the previous claims, **characterised in that** the solids in suspension of up to 20 microns that are present in the liquid phase are removed using a decanter.

17. Process according to the previous claims, **characterised in that** the solids in suspension of up to 5 microns that are present in the liquid phase are removed using a clarifier.

18. Process according to the previous claims, **characterised in that** the liquid phase produced after centrifuging is concentrated to achieve a value of between 10% and 50% total solids.

19. Process according to the previous claims, **characterised in that** the liquid phase produced after centrifuging is concentrated to achieve a value of 16% total solids.

20. Process according to the previous claims, **characterised in that** the liquid phase is concentrated using concentrators within a temperature range of between 60°C and 100°C.

21. Process according to the previous claims, **characterised in that** the liquid phase is concentrated using concentrators at a temperature of 75°C.

22. Process according to the previous claims, **characterised in that** the liquid phase can be concentrated under vacuum conditions at pressures below 200 mbar.

23. Process according to the previous claims, **characterised in that** the concentrated liquid phase is dried to less than 10% moisture.

24. Process according to the previous claims, **characterised in that** the concentrated liquid phase is preferably dried to less than 5% moisture.

25. Process according to the previous claims, **characterised in that** the concentrafed liquid phase is dried to a minimum of 3% moisture.

26. Process according to the previous claims, **characterised in that** the drying is carried out at a normal pressure or under vacuum conditions, and at a temperature above 60°C and below 150°C

27. Process according to the previous claims, **characterised in that** the drying is carried out at a normal pressure or under vacuum conditions, and at a temperature of 100°C.

28. Process according to the previous claims, **characterised in that** the product is dried using an aerosol dryer.

29. Process according to the previous claims, **characterised in that** the product is dried using a vertical, horizontal or vacuum dryer.

30. Process according to the previous claims, **characterised in that** the dry product is pressed to produce a product with particles smaller than a maximum of 300 microns in 99%.

31. Process according to the previous claims, **characterised in that** the dry product is pressed to produce a product with particles smaller than 100 microns in 99%.

32. Process according to the previous claims, **characterised in that** enzyme is inactivated at temperatures above 90°C.

33. Process according to the previous claims, **characterised in that** the end product is a cocoa extract rich in soluble dietary fibres that is ideal as a chocolate complement, in bakery products, beverages, snacks, dairy products, and desserts.

## Patentansprüche

1. Verfahren zur Herstellung eines gutlöslichen Kakaoextrakts, der in Lebensmitteln, Nutrazeutika, Nahrungsergänzungsmitteln und Funktionsnahrung verwendet wird, im Wesentlichen **dadurch gekennzeichnet, dass** es sechs Schritte umfasst, nämlich:
a. Sterilisation der Kakaoschale und/oder des Presskuchen-Rohmaterials mit übersättigtem Dampf.
b. Mischen des bereits sterilisierten Kakao-Rohmaterials mit Wasser.
c. Enzymatische Behandlung, um die Extraktion der löslichen Komponenten zu unterstützen, wodurch ein fester Teil und ein flüssiger Teil erzeugt werden.
d. Trennung der festen Phase und der flüssigen Phase, Durchführen von zwei Schritten, einen ersten zentrifugierenden und einen zweiten klärenden.
e. Konzentrierung der flüssigen Phase.
f. Trocknung des Konzentrats von der flüssigen Phase.

2. Verfahren nach dem vorigen Anspruch, **dadurch gekennzeichnet, dass** es einen optionalen siebten Schritt bietet, der aus Mahlen des trockenen, aus der flüssigen Phase hergestellten Konzentrats besteht.

3. Verfahren nach den Ansprüchen 1 und 2, **dadurch gekennzeichnet, dass** das Kakao-Rohmaterial aus der Kakaoschale besteht, die durch Trennung von der Kakaobohne hergestellt ist.

4. Verfahren nach den Ansprüchen 1 und 2, **dadurch gekennzeichnet, dass** das Kakao-Rohmaterial aus Kakao-Presskuchen besteht.

5. Verfahren nach den Ansprüchen 1 und 2, **dadurch gekennzeichnet, dass** das Kakao-Rohmaterial aus einer Mischung aus zwei der Produkte besteht, die in den Ansprüchen 3 und 4 beschrieben sind.

6. Verfahren nach den Ansprüchen 1 und 2, **dadurch gekennzeichnet, dass** das Kakao-Rohmaterial aus einer Mischung aus drei der Produkte besteht, die in den Ansprüchen 3 und 4 beschrieben sind.

7. Verfahren nach den vorigen Ansprüchen, **dadurch gekennzeichnet, dass** das Kakao-Rohmaterial durch übersättigten Dampf bei einer Temperatur von über 100°C, ausgesetzt über 5 Minuten, sterilisiert wird.

8. Verfahren nach den vorigen Ansprüchen, **dadurch gekennzeichnet, dass** das Kakao-Rohmaterial durch übersättigten Dampf bei einer Temperatur von über 150°C, ausgesetzt über 30 Minuten, sterilisiert wird.

9. Verfahren nach den vorigen Ansprüchen, **dadurch gekennzeichnet, dass** das Kakao-Rohmaterial in einem Anteil von zwischen 1:5 und 1:15 Teilen von Kakao-Rohmaterial:Wasser gemischt wird, wobei die Mischung bei einer stabilisierten Temperatur zwischen 50°C und 70°C durchgeführt wird.

10. Verfahren nach den vorigen Ansprüchen, **dadurch gekennzeichnet, dass** das Kakao-Rohmaterial in einem Anteil von 1 Teil Kakao zu 7 Teilen Wasser vermischt wird.

11. Verfahren nach den vorigen Ansprüchen, **dadurch gekennzeichnet, dass** ein Enzym an das Kakao:Wasser-Gemisch in einer Konzentration von mindestens 0,005 Fungal (Pilz-) Beta-Glucanase-Einheiten (FBG) pro Kilogramm Kakao-Rohmaterial zugeführt wird.

12. Verfahren nach den vorigen Ansprüchen, **dadurch gekennzeichnet, dass** ein Enzym an das Kakao:Wasser-Gemisch in einer Konzentration von mindestens 0,01 Fungal (Pilz-) Beta-Glucanase-Einheiten (FBG) pro Kilogramm Kakao-Rohmaterial zugeführt wird.

13. Verfahren nach den vorigen Ansprüchen, **dadurch gekennzeichnet, dass** die enzymatische Reaktion während eines Zeitraums von zwischen 1 und 3 Stunden geschieht.

14. Verfahren nach den vorigen Ansprüchen, **dadurch gekennzeichnet, dass** die enzymatische Reaktion während eines Zeitraums von 2 Stunden geschieht.

15. Verfahren nach den vorigen Ansprüchen, **dadurch gekennzeichnet, dass** die Trennung des Kakao- und Wassergemischs zur Erzeugung einer flüssigen Phase und einer festen Phase unter Verwendung einer Zentrifugaltechnik geschieht.

16. Verfahren nach den vorigen Ansprüchen, **dadurch gekennzeichnet, dass** die Feststoffe in Suspension von bis zu 20 Mikrometern, die in der flüssigen Phase vorliegen, unter Verwendung eines Dekanters entfernt werden.

17. Verfahren nach den vorigen Ansprüchen, **dadurch gekennzeichnet, dass** die Feststoffe in Suspension von bis zu 5 Mikrometern, die in der flüssigen Phase vorliegen, unter Verwendung einer Klärvorrichtung entfernt werden.

18. Verfahren nach den vorigen Ansprüchen, **dadurch gekennzeichnet, dass** die nach dem Zentrifugieren erzeugte flüssige Phase konzentriert wird, um einen Wert zwischen 10% und 50% Gesamtfeststoffgehalt zu erreichen.

19. Verfahren nach den vorigen Ansprüchen, **dadurch gekennzeichnet, dass** die nach dem Zentrifugieren erzeugte flüssige Phase konzentriert wird, um einen Wert von 16% Gesamtfeststoffgehalt zu erreichen.

20. Verfahren nach den vorigen Ansprüchen, **dadurch gekennzeichnet, dass** die flüssige Phase unter Verwendung von Konzentratoren innerhalb eines Temperaturbereichs von 60°C und 100°C konzentriert wird.

21. Verfahren nach den vorigen Ansprüchen, **dadurch gekennzeichnet, dass** die flüssige Phase unter Verwendung von Konzentratoren bei einer Temperatur von 75°C konzentriert wird.

22. Verfahren nach den vorigen Ansprüchen, **dadurch gekennzeichnet, dass** die flüssige Phase im Vakuum bei Drücken unterhalb von 200 mbar konzentriert wird.

23. Verfahren nach den vorigen Ansprüchen, **dadurch gekennzeichnet, dass** die konzentrierte flüssige Phase auf weniger als 10% Feuchtigkeit getrocknet wird.

24. Verfahren nach den vorigen Ansprüchen, **dadurch gekennzeichnet, dass** die konzentrierte flüssige Phase vorzugsweise auf weniger als 5% Feuchtigkeit getrocknet wird.

25. Verfahren nach den vorigen Ansprüchen, **dadurch gekennzeichnet, dass** die konzentrierte flüssige Phase auf ein Minimum von 3% Feuchtigkeit getrocknet wird.

26. Verfahren nach den vorigen Ansprüchen, **dadurch gekennzeichnet, dass** die Trocknung bei Normaldruck oder unter Vakuum erfolgt und bei einer Temperatur von über 60°C und unter 150°C.

27. Verfahren nach den vorigen Ansprüchen, **dadurch gekennzeichnet, dass** die Trocknung bei Normaldruck oder unter Vakuum und bei einer Temperatur von 100°C erfolgt.

28. Verfahren nach den vorigen Ansprüchen, **dadurch gekennzeichnet, dass** das Produkt unter Verwendung eines Aerosol-Trockners getrocknet wird.

29. Verfahren nach den vorigen Ansprüchen, **dadurch gekennzeichnet, dass** das Produkt unter Verwendung eines Vertikal-, Horizontal- oder Vakuum-Trockners getrocknet wird.

30. Verfahren nach den vorigen Ansprüchen, **dadurch gekennzeichnet, dass** das trockene Produkt gepresst wird, um ein Produkt mit Teilchen zu erzeugen, die zu 99% kleiner sind als maximal 300 Mikrometer.

31. Verfahren nach den vorigen Ansprüchen, **dadurch gekennzeichnet, dass** das trockene Produkt gepresst wird, um ein Produkt mit Teilchen zu erzeugen, die zu 99% kleiner sind als 100 Mikrometer.

32. Verfahren nach den vorigen Ansprüchen, **dadurch gekennzeichnet, dass** das Enzym bei Temperaturen über 90°C inaktiviert wird.

33. Verfahren nach den vorigen Ansprüchen, **dadurch gekennzeichnet, dass** das Endprodukt ein Kakaoextrakt ist, der reich an löslichen Ballaststoffen ist und ideal ist als Schokoladenkomplement, in Backwaren, Getränken, Snacks, Milchprodukten und Desserts.

## Revendications

1. Procédé de préparation d'un extrait de cacao hautement soluble du type utilisé dans les aliments, les produits nutraceutiques, les compléments alimentaires et les aliments fonctionnels, caractérisé essentiellement en ce qu'il comprend six étapes, à savoir :
a. la stérilisation des coques de cacao et/ou du matériau brut du tourteau de pressage par une vapeur sursaturée,
b. le mélange du matériau brut de cacao déjà stérilisé avec de l'eau,
c. le traitement enzymatique afin d'aider à l'extraction des composants solubles, créant une partie solide et une partie liquide,
d. la séparation de la phase solide et de la phase liquide, en réalisant deux étapes, une première étape de centrifugation et ensuite, une étape de clarification,
e. la concentration de la phase liquide,
f. le séchage du concentré à partir de la phase liquide.

2. Procédé selon la revendication précédente, **caractérisé en ce qu'**il présente une septième étape optionnelle consistant en broyage du concentré sec produit à partir de la phase liquide.

3. Procédé selon les revendications 1 et 2, **caractérisé en ce que** le matériau brut de cacao consiste en coques de cacao produites par sa séparation de la fève de cacao.

4. Procédé selon les revendications 1 et 2, **caractérisé en ce que** le matériau brut de cacao consiste en tourteau de pressage du cacao.

5. Procédé selon les revendications 1 et 2, **caractérisé en ce que** le matériau brut de cacao consiste en un mélange de deux des produits décrits dans les revendications 3 et 4.

6. Procédé selon les revendications 1 et 2, **caractérisé en ce que** le matériau brut de cacao consiste en un mélange des trois produits décrits dans les revendications 3 et 4.

7. Procédé selon les revendications précédentes, **caractérisé en ce que** le matériau brut de cacao est stérilisé par une vapeur sursaturée à des températures supérieures à 100° C et pendant une exposition de plus de 5 minutes.

8. Procédé selon les revendications précédentes, **caractérisé en ce que** le matériau brut de cacao est stérilisé par une vapeur sursaturée à une température à 150° C et pendant une exposition de 30 minutes.

9. Procédé selon les revendications précédentes, **caractérisé en ce que** le matériau brut de cacao est mélangé en une proportion entre 1:5 parties et 1:15 parties de matériau brut de cacao : eau, ce mélange étant réalisé à une température stabilisée entre 50° C et 70° C.

10. Procédé selon les revendications précédentes, **caractérisé en ce que** le matériau brut de cacao est mélangé en une proportion de 1 partie de cacao à 7 parties d'eau.

11. Procédé selon les revendications précédentes, **caractérisé en ce qu'**une enzyme est ajoutée au mélange de cacao : eau en une concentration d'au moins 0,005 unités de bêta-glucanase fongique (FBG) par kg de matériau brut de cacao.

12. Procédé selon les revendications précédentes, **caractérisé en ce qu'**une enzyme est ajoutée au mélange cacao : eau en une concentration de 0,01 unité de bêta-glucanase fongique par kg de matériau brut de cacao.

13. Procédé selon les revendications précédentes, **caractérisé en ce que** la réaction enzymatique s'effectue pendant une durée entre 1 et 3 heures.

14. Procédé selon les revendications précédentes, **caractérisé en ce que** la réaction enzymatique s'effectue pendant une durée de 2 heures.

15. Procédé selon les revendications précédentes, **caractérisé en ce que** la séparation du mélange de cacao et de l'eau pour produire une phase liquide et une phase solide est réalisée en utilisant une technique de centrifugation.

16. Procédé selon les revendications précédentes, **caractérisé en ce que** les solides en suspension allant jusqu'à 20 microns qui sont présents dans la phase liquide sont retirés à l'aide d'un décanteur.

17. Procédé selon les revendications précédentes, **caractérisé en ce que** les solides en suspension allant jusqu'à 5 microns qui sont présents dans la phase liquide sont retirés à l'aide d'un clarificateur.

18. Procédé selon les revendications précédentes, **caractérisé en ce que** la phase liquide produite après centrifugation est concentrée pour obtenir une valeur entre 10 % et 50 % des solides totaux.

19. Procédé selon les revendications précédentes, **caractérisé en ce que** la phase liquide produite après centrifugation est concentrée pour atteindre une valeur de 16 % de solides totaux.

20. Procédé selon les revendications précédentes, **caractérisé en ce que** la phase liquide est concentrée en utilisant des concentrateurs dans une plage de températures entre 60° C et 100° C.

21. Procédé selon les revendications précédentes, **caractérisé en ce que** la phase liquide est concentrée en utilisant des concentrateurs à une température de 75° C.

22. Procédé selon les revendications précédentes, **caractérisé en ce que** la phase liquide peut être concentrée dans des conditions sous vide à des pressions inférieures à 200 mbars.

23. Procédé selon les revendications précédentes, **caractérisé en ce que** la phase liquide concentrée est séchée à moins de 10 % d'humidité.

24. Procédé selon les revendications précédentes, **caractérisé en ce que** la phase liquide concentrée est de préférence séchée à moins de 5 % d'humidité.

25. Procédé selon les revendications précédentes, **caractérisé en ce que** la phase liquide concentrée est séchée à un minimum de 3 % d'humidité.

26. Procédé selon les revendications précédentes, **caractérisé en ce que** le séchage est réalisé à une pression normale ou dans des conditions sous vide et à une température supérieure à 60° C et inférieure à 150° C.

27. Procédé selon les revendications précédentes, **caractérisé en ce que** le séchage est réalisé à une pression normale ou dans des conditions sous vide et à une température de 100° C.

28. Procédé selon les revendications précédentes, **caractérisé en ce que** le produit est séché en utilisant un séchoir aérosol.

29. Procédé selon les revendications précédentes, **caractérisé en ce que** le produit est séché en utilisant un séchoir vertical, horizontal ou sous vide.

30. Procédé selon les revendications précédentes, **caractérisé en ce que** le produit sec est pressé pour produire un produit avec des particules inférieures au maximum à 300 microns dans 99 %.

31. Procédé selon les revendications précédentes, **caractérisé en ce que** le produit sec est pressé pour produire un produit avec des particules inférieures à 100 microns dans 99 %.

32. Procédé selon les revendications précédentes, **caractérisé en ce que** l'enzyme est inactivée à une température supérieure à 90° C.

33. Procédé selon les revendications précédentes, **caractérisé en ce que** le produit final est un extrait de cacao riche en fibres alimentaires solubles qui est idéal comme complément chocolaté, dans des produits de boulangerie, des boissons, des snacks, des produits laitiers et des desserts.
